# EUROPEAN PATENT APPLICATION

(11) **EP 4 832 650 A1**
(43) Date of publication of application: **28.10.2026**
(21) Application number: 25171985.2
(22) Date of filing: 23.04.2025
(51) Int. Cl.: H04W 76/15, H04W 24/04, H04W 36/00

(54) **REDUNDANCY MECHANISMS FOR RADIO NETWORKS**

(71) Applicant: Siemens Aktiengesellschaft, 80333 München (DE)
(72) Inventor: Fiorentino, Vincenzo, 90491 Nürnberg (DE)
(74) Representative: Siemens Patent Attorneys

(57) **Abstract**

A method of, preferably redundant, communication in a radio network (RN), comprising the steps of: connecting a first UE to a first access node (RU), wherein the first access node (RU) is communicatively coupled to a first local core network (DN1), and
connecting the first UE to a second access node (RU) which is communicatively coupled to a second local core network (DN2).

## Description

*Independent of the grammatical term usage, individuals with male, female or other gender identities are included within the term.*

### TECHNICAL FIELD

The present invention relates to a method and system of, in particular redundant, communication in a radio network, e.g., in an industrial environment.

### BACKGROUND

Industrial devices, in particular mobile, such as mobile robots, and thus moving, in a production area and communicating with other industrial devices exchange data via a radio link of a radio network, e.g., in an industrial environment, need reliable and/or low latency communication, such as URLLC. Such communication may be provided by so-called industrial wireless communication systems, such as a 5G private network and/or an industrial WLAN installed in the production area, e.g., a factory hall, of the industrial environment. Due to the fact that the radio coverage may change depending on the location of the flexible production area it is quite challenging to maintain a quality-of-service (QoS), or the radio link altogether, which is required for providing reliable communication in the industrial environment, and between the industrial devices. Therefore, it has become known to make a scheduler in a radio network aware of application traffic.

Hence a communication may suffer not only from individual packet losses, but also from link failure. It is thus a goal to improve the network's availability. For example a (software) application in the industrial environment may transmit and/or receive data over the radio network. For example, a controller (sender) and/or an actuator (receiver) may be communicatively coupled via the radio network. The controller may periodically transmit control data to the actuator via a communication channel of a communication network of which the radio network is a part of. This communication may be based on data packets (on the physical layer, also referred to as frames on the data link layer) which are transmitted with a given cycle time, such as every 5 milliseconds. However, packet losses and link failure can occur at different points in time and at different points in space along the transmission path. In order to be aware of packet losses, a survival time of the application is defined. In known industrial communication networks, such as ProfiNet or OPC UA, a survival time of 3 cycle times is defined. This means that the communication system should minimize the probability of 3 consecutive packets being dropped. Otherwise, the industrial device being the receiver of the communication will be controlled into a safety mode. Survival time may be defined as in 3GPP TS 22.261 (Service requirements for the 5G system), and/or may be synonymous with the time period an application can survive without any burst. The survival time refers to the time that an application consuming a communication service may continue without an anticipated message. Maximum number of messages (message is equivalent to a burst) or in terms of time units. A single burst is expected within a single time period referred to as the periodicity. The maximum survival time indicates the time period the communication service may not meet the application's requirement before the communication service is deemed to be in an unavailable state. The survival time indicates to the communication service the time available to recover from failure. The relation between logical communication link, communication service and application statuses (example with lost messages) is shown, e.g., in Figure C.3-1 of ETSI TS 122 104 V16.5.0 (2020-09). Therein, the logical communication link is up and running (blue line is UP). A source device starts sending periodic messages to a target device (orange arrows), on which an automation function (application) is running. The communication service is, from the point of view of the target application, in an up state (violet line is UP) and so is the application (green line is UP). The logical communication link status changes to down state if it no longer can support end-to-end transmission of the source device's messages to the target device in agreement with the negotiated communication requirements. Once the application on the target device senses the absence (or unsuccessful reception) of expected messages ("Deadline for expected message" in Figure C.3-1), it will wait a pre-set period before it considers the communication service to be unavailable; this is the so-called survival time. The survival time can be expressed as - a period or, - especially with cyclic traffic, as maximum number of consecutive incorrectly received or lost messages. If the survival time has been exceeded, both the communication service and the application transition into a down state (violet and green lines change to DOWN in Figure C.3-1). The application will usually take corresponding actions for handling such situations of unavailable communication services. For instance, it will commence an emergency shutdown. Note that this does not imply that the target application is "shut off"; rather it transitions into a pre-defined state, e.g. a safe state. In the safe state, the target application might still listen to incoming packets or may try to send messages to the source application. d) Once the logical communication link status is in the up state again (blue line in Figure C.3-1 changes to UP), the communication service state as perceived by the target application will change to the up state. The communication service is thus again perceived as available (violet line changes to UP in Figure C.3-1). The state of the application, however, depends on the counter measures taken by the application. The application might stay in down state if it is in a safe state due to an emergency shutdown. Or, the application may do a recovery and change to up state again. The time needed for the application to return to the up state after the communication service is restored is shown as "Application recovery time" in Figure C.3-1. Messages may be corrupted due to errors within an application, due to errors on the transmission medium, or due to message interference. In order for the automation application system to operate, messages need to be exchanged between spatially distributed application functions.

### SUMMARY

Radio networks, such as 5G networks, are expected to provide a high-level of reliability (99,99999%) and high availability. Herein, a radio network system, comprising in particular a network topology and/or a packet duplication in order to fulfill this requirement is proposed.

According to a first aspect a method of, preferably redundant, communication in a radio network is proposed. The method comprising the step of connecting a first UE to a first access node, wherein the first access node is communicatively coupled to a first local core network. The method further comprising the step of, preferably simultaneously, connecting the first UE to a second access node which is communicatively coupled to a second local core network.

According to a second aspect a radio system operative to perform the method steps according to the first aspect is proposed.

### BRIEF DESCRITION OF THE DRAWINGS

Figure 1 illustrates a redundancy architecture in a first embodiment.
Figure 2 illustrates a redundancy architecture for redundant communication between a UE and a backend application.
Figure 3 illustrates a redundancy architecture for a redundant UE to UE communication.
Figure 4 illustrates a redundancy architecture with redundant transmission and comprising two UEs as redundant receivers.

### DETAILED DESCRIPTION

As mentioned, radio networks, such as 5G, are expected to provide a high-level of reliability (99,99999%) as well as high availability. The present disclosure proposes a radio network architecture, a network topology, and a packet duplication protocol to fulfill these requirements.

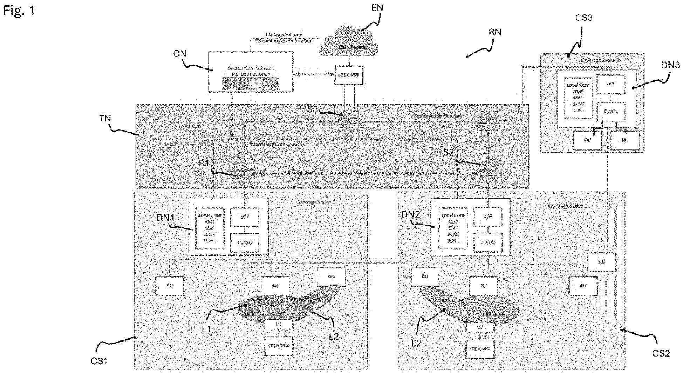

As shown in Figure 1, regarding the redundancy architecture, a radio network, such as the 5G architecture, is distributed and implemented with several local core networks DN1, DN2, DN3 also referred to distributed (5G) nets, DNs, or micronets, that have a reduced core functionality. A local core network DN1, DN2, DN3 may thus comprise one or more user plane functions, UPF, and as well as a radio access network, RAN, in one place. Such DNs, also referred to as micronets, have inter alia become known from European patent application publication EP 4358643 A1 and are referred to herein as local core networks DN1, DN2, DN3 as well.

In addition to the local core networks DN1, DN2, DN3, a central core network CN may be provided. The central core network CN, such as for example a 5G Core, includes (all) standard core functions, e.g., including the network exposure function, NEF, to interface to external applications and/or a management software. The central core network CN may also include a Central Unified Data Management, UDM, profile management, etc. The central core network CN may be implemented in a data center, e.g., on an industrial PC, IPC, in order to guarantee the highest reliability possible.

The distributed net, DN, such as DN1, DN2, DN3, may implement one or more essential core functions like SMF, AMF, and/or Authentication. Each DN may synchronize its data, e.g., settings and/or configuration, with the central core networkCN, e.g., for the SIM provisioning and/or profiling. The data of the one or more local core network DN1, DN2, DN3 is matched to the data in the central core network CN. Also, one or more authentication keys may be (down-)loaded into the one or more local cores networks DN1, DN2, DN3, preferably in a secure way. The UPF and the CU/DU may also be instantiated and/or running locally in the one or more DN, such as DN1, DN2, DN3. Each DN may provide radio coverage for a sector, e.g., coverage sector 1, coverage sector 2, and coverage sector 3, respectively. A sector may for example correspond to a cell in the discrete automation vertical or, a substation in the electric power, or a section of a track in rail applications. A DN may thus form a self-sufficient network (for serving one or more UEs) and can work without the central core network and/or independently from other DNs. One or more RUs of a DN may be geographically displaced and may also cover an area of another sector. Thus, a plurality of RUs may cover the same area, e.g., of a sector but they are connected to two different DN. For example, a first RU may be connected to the first local core network DN1, whereas a second RU covering at least in part the same sector a s the first RU may be connected to a second local core network DN2. The RUs may provide different cell identifiers, e.g., Cell ID 1A and Cell ID 1B, covering the same area (and are connected to different CU/DU). Hence, e.g., in case a DN and/or an RU is out of service or may not be able to serve a UE, the coverage is guaranteed via the redundant DN without any kind of outage and/or reconfiguration time. In the embodiment of Figure 1 three sectors are shown by way of example, but only two sectors or more than three sectors may be provided. In a radio network architecture, such as 5G, the baseband unit, BBU, functionality is split into two functional units: a distributed unit, DU, responsible for real time L1 and L2 scheduling functions, and a centralized unit, CU, responsible for non-real time, higher L2 and L3. A radio unit, RU, handles the digital front end, DFE, and the parts of the PHY layer, as well as the digital beamforming functionality. A distributed net DN1, DN2, DN3 may comprise in addition to a local core network a CU and/or a DU as shown in Figure 1. In the Universal Mobile Telecommunications System , UMTS, and 3GPP Long Term Evolution, LTE, user equipment, UE, is any device used directly by an end-user to communicate. It can be a hand-held telephone, a laptop computer equipped with a mobile broadband adapter, or any other device. It connects to the base station Node B/eNodeB as specified in the ETSI 125/136-series and 3GPP 25/36-series of specifications. It roughly corresponds to the mobile station, MS, in GSM systems. The radio interface between the UE and the Node B is called Uu. In the context of UMTS, Uu stands for the interface between UTRAN (UMTS Terrestrial Radio Access Network) and the UE. A UE handles one or more of the following tasks towards the local and/or central core network: Mobility management, Call control ,Session management, Identity management. The corresponding protocols are transmitted transparently via a Node B, that is, Node B does not change, use or understand the information. These protocols are also referred to as Non Access Stratum protocols. The UE is a terminal device in a network.

A DN may inform the central core network CN about the one or more UEs registered under its coverage. This information is made available to the one or more PRP/FRER nodes to route both paths efficiently to the relative DN. PRP is a layer 2 redundancy protocol, which allows higher layer network protocols to operate without modification. In case of a UE moving across the DNs, the coverage is planned in order for a UE moving from sector 1 to sector 2 to be covered by cell 1A in sector 1 and by cell 1B in sector 2. As soon as it moves out of coverage from cell 1B and moves under another cell connected to the DN2, the UE performs an intra DU handover, e.g., according to 3GPP standard. A first PRP/FRER node may be located on the UE or may be communicatively coupled to the UE, e.g., in a capillary network (that may be accessed via the UE). A second PRP/FRER node may be communicatively coupled to first node via the radio network, preferably via the transmission network TN. The second PRP/FRER node may be located in the data network EN or the central core network CN. The second PRP/FRER node may be located between the data network EN and the transmission network, as shown in Figure 1.

The transmission network, TN, e.g., comprising the midhaul and/or backhaul, may connect the local core networks DN1, DN2, DN3 to the central core network CN. The transmission network TN may have a ring topology where in case one link or one switch of the transmission network has an outage, the communication between the (external) data network EN and each DN as well as between the DNs is guaranteed. In this case layer 2 and layer 3 protocols can be used for the routing as well as high-availability Seamless Redundancy, HRS. HRS is a network protocol for Ethernet that provides seamless failover against failure of any single network component. PRP and HSR are independent of the application-protocol and can be used by most Industrial Ethernet protocols in the IEC 61784 suite. HSR does not cover the failure of end nodes, but redundant nodes can be connected via HSR. The transmission network TN may comprise one or more switches, bridges, and/or gateways implementing the ring topology.

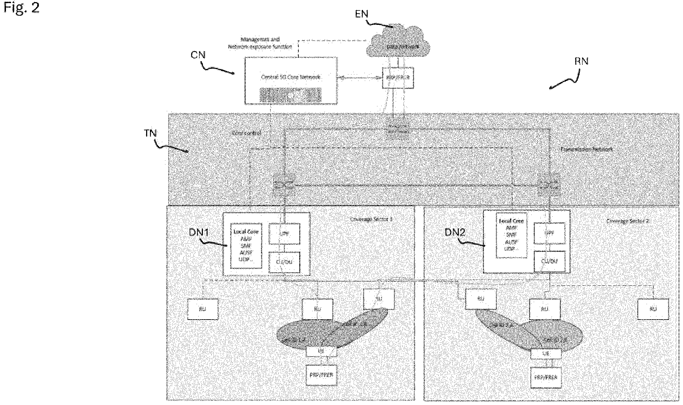

Now turning to Figure 2, a PRP or a Frame Replication and Restoration protocol, FRER, may be used, for example depending on the network routing capabilities, e.g., on layer 2 or layer 3. Packets transiting between communication endpoints, such as a software application, e.g., in or via the data network, to a UE and/or a machine behind a UE, are routed to the two or more DNs offering coverage to the (target) UE. The communication endpoint, e.g. said PRP/FRER enabled device, has the capabilities to get this information from the central core network CN. Once the two (target) DNs, e.g. DN1 and DN2, have been identified, the packets will be sent to the two (target DNs) and routed to the target UE. The UE will be under coverage of radio cells 1A and 1B which are respectively connected to the DN 1 and DN 2. Thereby a physical redundant path is implemented. Thus, in case of a failure of a RU or of the entire DN, the UE will still be able to connect to the corresponding communication endpoint, such as said software application via the communication paths illustrated in Figure 2 by way of the yellow curves between the communication endpoints in data network and the UE/PRP/FRER respectively. The software application may be an OT application. Operational technology, OT, is hardware and/or software that detects or causes a change, through the direct monitoring and/or control of industrial equipment, assets, processes and events, e.g. in said industrial environment (the UE is located in).

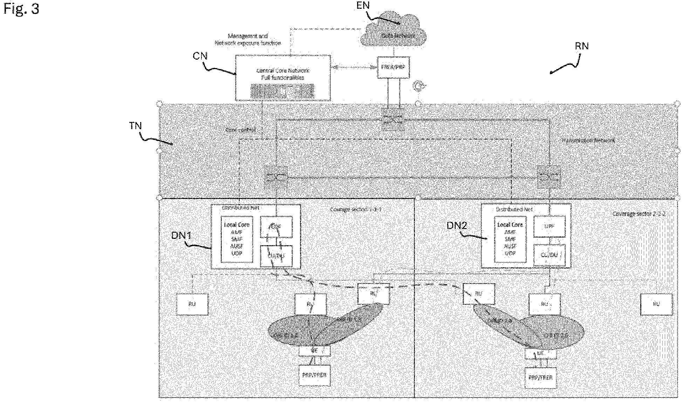

A redundant UE to UE communication is illustrated in Figure 3. UE to UE communication can also benefit of the proposed redundancy architecture and/or topology. For example, each of the UEs may be under the coverage of cells which are generated from a RU of DN1, i.e. Cell ID 1.A, and a RU of DN2, i.e. Cell ID 1.b, (and the other UE is under coverage of Cell ID 2.A and Cell ID 2.B). In such a configuration the up-link signal of one of the UEs is received by both RU and forwarded to the relative UPF, which in turn will forward the data packets to the destination UE. Both UEs hence are under the coverage of one RU belonging to the corresponding coverage sector as well as a redundant RU connected to another DN, thereby providing redundancy.

A further or alternative redundancy mechanism can be achieved by providing separate radio channels for the redundancy path. The two RUs covering a single UE can also work on two separate radio channels, this solution adds an additional requirement to the UE which shall perform also carrier aggregations. On the other hand, this makes the solution more robust.

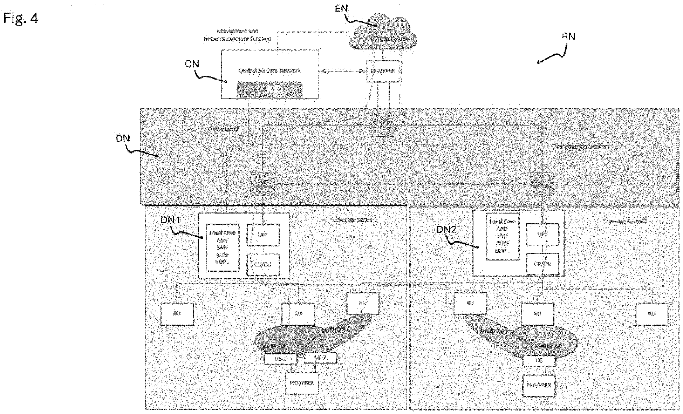

Figure 4 shows an additional or alternative embodiment of a redundancy mechanism. Therein, two UEs are provided, e.g., attached to a (mobile) machine, to increase the reliability at the machine side. By providing two UEs, one connected to one RU of a first DN, DN1, and the other UE connected to a second RU of a second DN, DN2, the reliability of the communication is improved, e.g., in case of HW/SW failure of one UE.

Further embodiments may comprise a radio hub which can be placed between the DU and the RUs. The Radio Hub can introduce another redundancy mechanism. It can be realized also with the classical architecture where the radio network topology is the same but packet duplication is performed over two radio cells.

In a further embodiments VLAN and/or VXLAN may be used. For example, in case a redundancy protocol such PRP is used, i.e. a layer 2 protocol, the Ethernet frames may be encapsulated in a VXLAN or may comprise a VLAN tag. Either the PRP switch has the capability of configuring a VTEP or an extra FW or switch with these capabilities shall be placed in between. A VTEP, i.e. a virtual tunnel endpoint, enables a encapsulation and/or decapsulation of network traffic. The other end point of the VXLAN may be the (target) UE. The same may be applied for the UE-2-UE communication.

With respect to time synchronization, one or more or preferably all DNs and the central core network CN may be synchronized via a PTP protocol, in order to guarantee the functioning of the TDD system. Each time a UE performs a location update, the new Cell ID is communicated to the central core. This information may be used by the PRP/FRER router to address the right DN.

Furthermore, the two RUs covering the same area can deliver the same Cell ID creating a unique cell. In this case the scheduler of both DNs must coordinate the slot assignments for each UE. Otherwise, the two channel solution proposed above reduces this coordination function.

The embodiments proposed herein introduce a new concept of network distribution that creates a strong redundancy mechanism from the system point of view and at the same time supports frame replication and restoration protocols or PRP to increase further the communication reliability.

Distributed 5G networks, i.e., said DNs DN1, DN2, DN3 which are autarkic and are only synchronized to the central core network CN. All DNs are connected in a loop, e.g., said ring topology, and each one offers a RU as redundancy for one RU in another DN. This configuration enables also the UE to UE communication, e.g., with PRP/FRER. In case of an outage of one DU the service remains unaffected, i.e. without any time interruption. The proposed redundancy mechanisms are particularly advantageous in the field of process and/or factory automation as well as for rail applications.

Thus, redundancy mechanisms are disclosed herein which provide a failsafe communication between communication endpoints via a radio network. Among others, a method of, preferably redundant, communication in a radio network is proposed. The method comprising the steps of connecting a first UE to a first access node, wherein the first access node is communicatively coupled to a first local core network, and preferably simultaneously, i.e. at the same time, and/or in parallel, connecting the first UE to a second access node is communicatively coupled to a second local core network. Connecting may be understood as enabling transmission and reception from and/or to the respective access nodes. Hitherto the UE(s) may be associated with and/or registered to the respective access nodes. The access node may be a radio unit of a base station, such as a gNb. It should be understood, that the base station may comprise further components such as said central unit, CU, and/or a distributed unit DU. As result the UE is communicatively coupled to the first and the second base station. Furthermore, due to the in-stantiation of two local cores the communication becomes more robust and independent of the central core. As described herein communication to the first access node and/or the second access node may be performed on the same or different radio resources, such as resource elements or resource blocks.

In the Universal Mobile Telecommunications System (UMTS) and 3GPP Long Term Evolution (LTE), user equipment (UE) is any device used directly by an end-user to communicate. It can be a hand-held telephone, a laptop computer equipped with a mobile broadband adapter, or any other device. It connects to the base station Node B/eNodeB/gNodeB as specified in the ETSI 125/136-series and 3GPP 25/36-series of specifications. It roughly corresponds to the mobile station (MS) in GSM systems. The term is used herein to refer to any device implementing a communication endpoint, e.g., a recipient, of the radio transmission of the access node.

In an embodiment the first access node is associated with a first radio access network. A radio access network, RAN, is part of a mobile telecommunication system implementing a radio access technology, RAT. Conceptually, it resides between a device such as a mobile phone, a computer, or any remotely controlled machine and provides connection with its (central) core network, CN. A radio access network, RAN, is part of the mobile network. It comprises of a base station, software running on it, and the antenna for the radio connection to the mobile devices (smartphones). It thus provides the radio connection between the devices and the (central) core network. Hence, a first access node may be part of a first RAN and/or a second access node may be part of a second RAN. Hence, the second access node is associated with a second radio access network. Furthermore, the first RAN may be connected via at least one backhaul (link) to the (central) core network, and/or the second RAN may be connected via at least one second backhaul link to the (central) core network. That is, the core network may be the same both RANs but there may different backhaul connections to the (central) core network. Furthermore, said first and second RANs may each possess a local core network.

The first access node may be associated with a first cell identifier and the first access node covers a first coverage area via a first radio link for transmission of one or more radio data packets to the first UE. A cell identifier, or cell ID, is a unique code that identifies a cell tower or sector within a radio network. Cell IDs can be used to identify base stations, BS, and thus one or more access nodes. A basic service set, BSS, and/or cell within the BSS are identified within a location area or routing area by (adding) a Cell Identity, Cl, to the location area or routing area identification. The CI may be of fixed length with 2 octets and it can be coded using a full hexadecimal representation.

The second access node may be associated with a second cell identifier and the second access node covers at least part of the first coverage area via a second radio link for transmission of one or more radio data packets, preferably one or more copies of the one or more radio data packets, to the first UE, e.g., in case of a failure of the first radio link. Hence, there may be a plurality of access nodes with different Cell IDs. It becomes possible to provide a redundancy mechanism for a plurality of cells which may overlap with respect to a coverage area, i.e. at least two access nodes covering the same are but providing their services by way of different cell IDs.

The first and second local core network managing the transmission of the radio data packets and the copies thereof, respectively, and comprise a (local) user plane function, a (local) session management function, an (local) access and mobility management function, and/or a (local) unified data repository. That is, there may be local instances (or copies) of one or more central core network functions in the local core network(s). Hence, providing a further redundancy mechanism.

Furthermore, the first and second radio access network may comprise a central unit and a distributed unit, respectively, which are coupled to the first and second access node, respectively. Hence, each RAN may comprise at least one base station.

As a result, a handover from the first radio link of the first cell to the second radio link of the second cell may be performed, and/or, preferably subsequently, a handover from the second radio link of the second access node to a third radio link of a third access node of the second radio access network and communicatively coupled to the second local core network may be performed. During a handover, a user equipment, UE, registers with a new base station (target base station). The UE may need to provide information about its PDU sessions and QoS flows. The target base station may then perform admission control checks to ensure it has the resources to support the UE. For example, the UE may be registered with the first access node (and/or radio access network), as well as the second access node (and/or second radio access network). For example, a RRC connection may be setup between the UE and a local network and/or central core network. The Radio Resource Control, RRC, protocol is used in UMTS, LTE and 5G on the Air interface. It is a layer 3 (Network Layer) protocol used between UE and Base Station. This protocol is specified by 3GPP in TS 25.331 for UMTS, in TS 36.331 for LTE and in TS 38.331 for 5G New Radio. RRC messages are transported via the PDCP-Protocol.

The major functions of the RRC protocol include connection establishment and release functions, broadcast of system information, radio bearer establishment, reconfiguration and release, RRC connection mobility procedures, paging notification and release and outer loop power control. By means of the signalling functions the RRC configures the user and control planes according to the network status and allows for Radio Resource Management strategies to be implemented.

The operation of the RRC is guided by a state machine which defines certain specific states that a UE may be present in. The different states in this state machine have different amounts of radio resources associated with them and these are the resources that the UE may use when it is present in a given specific state. Since different amounts of resources are available at different states the quality of the service that the user experiences and the energy consumption of the UE are influenced by this state machine.

The local and the central core networks may be communicatively coupled, e.g., via a backhaul link. Thus, one or more data packets may be transmitted from a central core network and/or a data network to the first local core and/or the second local core using a redundancy protocol, PRP/FRER.

Thus, the one or more data packets may be routed over a backhaul network and/or a transmission network, the backhaul network and/or the transmission network comprising a ring topology, i.e. where one or more switches are connected in a circular manner, and a first switch is coupled to the first access network, a second switch is coupled to the second access network and a third switch is coupled to a data network and/or a central core network. A ring topology is a network design where devices are connected in a closed loop, forming a ring. Data travels around the ring in one direction, from device to device, until it reaches its destination. In such a ring topology each node may be connected to exactly two other nodes, forming a single continuous pathway for signals through each node - a ring. Data travels from node to node, with each node along the way handling every packet. The ring topology allows for a "counter-rotating ring" (C-Ring) to form a redundant topology. That is in the event of a break, data is wrapped back onto the complementary ring before reaching the end of the cable, maintaining a path to every node along the resulting C-Ring. Thus, an additional ring in the opposite direction may be activated if a switch fails.

Thus, a redundancy protocol endpoint, preferably by an operational technology application communicatively coupled to the first UE, may receive the one or more radio data packets. Thus, a redundancy protocol may be set up between a first and second endpoint, i.e. between source and destination. The redundancy protocol may be the Parallel Redundancy Protocol, PRP, which is a network protocol standard for Ethernet that provides seamless failover against failure of any network component. This redundancy may be invisible to the application.

Furthermore it is proposed to connect a second UE to a third access node, e.g., with Cell ID 2.A, of the first radio access network via third radio link, and to connect the second UE to a fourth access node, e.g., with Cell ID 2.8, of the second radio access network, and to transmit and/or receive one or more radio data packets from the first UE and the second UE via the first access node, the first radio access network and the third radio access node to the second UE. Additionally or alternatively, it is proposed to transmitting and/or receive, e.g., redundantly, one or more radio data packets from the first UE and the second UE via the second access node, the second radio access network and the fourth radio access node to the second UE.

Still further is it proposed to transmit one or more data packets via the first link and the second link over the same or preferably different radio resources. Radio resource may comprise resource elements, i.e. the smallest unit of the resource grid made up of one subcarrier in frequency domain and one OFDM symbol in time domain. Radio resources may also comprise resource blocks which may be defined as one or more consecutive subcarriers in the frequency domain or in the time domain a resource block may be defined as one OFDM symbol, but exact time domain length may vary.

As mentioned, a first and a second UE may be provided. The first and the second UE may be communicatively coupled to the same application, e.g., an OT application, for example for performing a control action, i.e. controlling, and which application is preferably located on the same machine, e.g. an automated guided vehicle or a machine tool or another industrial machine.

Hence, herein method steps are proposed as well as a radio system, e.g., comprising a central core network as well as one or more local core networks, and a first and a second radio access network, and as the case may be, at least one UE and/or software applications, operative to perform the method steps disclosed herein.

## Claims

1. A method of, preferably redundant, communication in a radio network (RN), comprising the steps of:
connecting a first UE to a first access node (RU), wherein the first access node (RU) is communicatively coupled to a first local core network (DN1), and
connecting the first UE to a second access node (RU) which is communicatively coupled to a second local core network (DN2).

2. The method according to the preceding claim,
the first access node (RU) is associated with a first radio access network (CU, DU, RU) .

3. The method according to any one of the preceding claims,
wherein the first access node (RU) is associated with a first cell identifier (1.A) and the first access node (RU) covers a first coverage area (CS1) via a first radio link (L1) for transmission of one or more radio data packets to the first UE.

4. The method according to any one of the preceding claims,
wherein the second access node (RU) is associated with a second radio access network (CU, DU, RU).

5. The method according to any one of the preceding claims,
wherein the second access node (RU) is associated with a second cell identifier (1.B) and the second access node (RU) covers at least part of the first coverage area (CS1) via a second radio link (L2) for transmission of one or more radio data packets, preferably one or more copies of the one or more radio data packets, to the first UE, e.g., in case of a failure of the first radio link (L1).

6. The method according to any one of the preceding claims,
the first and second local core network (DN1, DN2) managing the transmission of the radio data packets and the copies thereof, respectively, and comprise a user plane function (UPF), a session management function (SMF), an access and mobility management function (AMF), and/or a unified data repository (UDR).

7. The method according to any one of the preceding claims,
the first and second radio access network (CU, DU, RU) comprising a central unit (CU) and a distributed unit (DU), respectively, which are coupled to the first and second access node (RU), respectively.

8. The method according to any one of the preceding claims,
performing a handover from the first radio link (L1) of the first cell (1.A) to the second radio link (L2) of the second cell (1.B), and/or, preferably subsequently,
performing a handover from the second radio link (L2) of the second access node (RU) to a third radio link (L3) of a third access node (RU) of the second radio access network (CU, DU, RU) and communicatively coupled to the second local core network (DN2).

9. The method according to any one of the preceding claims,
transmitting one or more data packets from a central core network (CN) and/or a data network (EN) to the first local core (DN1) and/or the second local core (DN2) using a redundancy protocol, PRP/FRER.

10. The method according to any one of the preceding claims,
routing the one or more data packets over a backhaul network and/or a transmission network (TN), the backhaul network and/or the transmission network (TN) comprising a ring topology, i.e. where one or more switches are connected in a circular manner, and a first switch (S1) is coupled to the first access network (CU, DU, RU), a second switch (S2) is coupled to the second access network (CU, DU, RU) and/or a third switch (S3) is coupled to a data network (EN) and/or a central core network (CN).

11. The method according to any one of the preceding claims,
receiving by a redundancy protocol endpoint (FRER/PRP), preferably by an operational technology application communicatively coupled to the first UE, the one or more radio data packets.

12. The method according to any one of the preceding claims,
connecting a second UE to a third access node (RU) of the first radio access network (CU, DU, RU) via third radio link (L3), and
connecting the second UE to a fourth access node (RU) of the second radio access network (CU, DU, RU), and
transmitting/receiving one or more radio data packets from the first UE and the second UE via the first access node (RU), the first radio access network (CU, DU, RU) and the third radio access node (RU) to the second UE, and/or
transmitting/receiving, e.g., redundantly, one or more radio data packets from the first UE and the second UE via the second access node (RU), the second radio access network (CU, DU, RU) and the fourth radio access node (DU) to the second UE.

13. The method according to any one of the preceding claims,
transmitting one or more data packets via the first link (L1) and the second link (L2) over the same or preferably different radio resources.

14. The method according to any one of the preceding claims,
wherein the first and the second UE are communicatively coupled to the same application, and preferably located on the same machine.

15. A radio system (RN) operative to perform the method steps of any one of the proceedings claims.
